Europäisches Patentamt

European Patent Office

Office européen des brevets

(19)

(11) Veröffentlichungsnummer : **0 161 433**
**B1**

(12) # EUROPÄISCHE PATENTSCHRIFT

(45) Veröffentlichungstag der Patentschrift :
02.03.88

(51) Int. Cl.⁴ : **C 08 F 10/02, C 08 F 4/64**

(21) Anmeldenummer : **85103433.0**

(22) Anmeldetag : **22.03.85**

(54) Verfahren zur Homo- und Mischpolymerisation von Ethylen.

(30) Priorität : **03.04.84 DE 3412337**

(43) Veröffentlichungstag der Anmeldung :
**21.11.85 Patentblatt 85/47**

(45) Bekanntmachung des Hinweises auf die Patenterteilung : **02.03.88 Patentblatt 88/09**

(84) Benannte Vertragsstaaten :
**BE DE FR GB IT NL SE**

(56) Entgegenhaltungen :
**DE-A- 2 640 679**

(73) Patentinhaber : **Ruhrchemie Aktiengesellschaft**
**Bruchstrasse 219**
**D-4200 Oberhausen 11 (DE)**

(72) Erfinder : **Spaleck, Walter, Dr. Dipl.-Chem.**
**Alexander-Flemming-Strasse 2**
**D-4290 Bocholt (DE)**
Erfinder : **Hobes, John, Dr. Dipl.-Chem.**
**Ernastrasse 2b**
**D-4220 Dinslaken (DE)**
Erfinder : **Geisheimer, Norbert**
**Schladstrasse 26**
**D-4200 Oberhausen (DE)**

(74) Vertreter : **Reichelt, Karl-Heinz, Dr.**
**Ruhrchemie Aktiengesellschaft Abt. PLD Postfach 13**
**01 60**
**D-4200 Oberhausen 11 (DE)**

## Beschreibung

Die vorliegende Erfindung betrifft ein Verfahren zur Homo- und Mischpolymerisation von Ethylen bei Drücken von 300 bis 3 500 bar in Gegenwart von Ziegler-Katalysatoren.

Es ist bekannt, Ethylen allein oder zusammen mit anderen Olefinen bei erhöhtem Druck und erhöhter Temperatur nach einem ionischen Mechanismus in Gegenwart von Ziegler-Katalysatoren zu polymerisieren. Diese Katalysatoren bestehen aus Verbindungen des Titans in der Oxidationsstufe drei oder vier und einem Aktivierungsmittel in Form organischer Aluminiumverbindungen.

Nicht alle Ziegler-Katalysatoren sind für eine derartige Homo- oder Mischpolymerisation von Ethylen geeignet, vielmehr müssen sie bestimmte Voraussetzungen erfüllen. So wird gefordert, daß die Katalysatoren auch bei Temperaturen von 150 °C und mehr noch hochaktiv sind. Die meisten Ziegler-Katalysatoren werden bei diesen Temperaturen jedoch schnell inaktiv oder liefern Polymerisate in schlechter Ausbeute. Für die technische Durchführbarkeit der Hochdruckpolymerisation ist es unerläßlich, daß die Katalysatorsuspension mit Hochdruckpumpen gut förderbar ist. Ferner sollen die Katalysatorsysteme nicht die Dimerisierung von Ethylen zu 1-Buten bewirken.

Es hat sich nämlich gezeigt, daß Copolymerisate aus Ethylen und 1-Buten weitaus schlechtere mechanische Eigenschaften aufweisen als z. B. Copolymerisate aus Ethylen und 1-Hexen, die technisch in großem Umfang hergestellt werden. Da unter hohem Druck bei einem Reaktordurchgang nur ein Teil des Ethylens bis zu etwa 30 % polymerisiert wird, muß das nicht umgesetzte Gas in den Reaktor zurückgeführt werden. Polymerisiert man in Gegenwart von Katalysatoren, die die Dimerisierung von Ethylen fördern, so erhält man 1-Buten in hoher Konzentration im Kreislaufgas. Daher werden z. B. bei Verwendung von 1-Hexen als Comonomerem im Reaktor tatsächlich Ethylen/1-Buten/1-Hexen-Terpolymere erzeugt. Auch die Herstellung von Ethylen-Homopolymeren ist unter diesen Umständen selbstverständlich nicht möglich. Eine Lösung des eben aufgezeigten Problems könnte darin bestehen, das Buten aus dem Kreislaufgas auszuschleusen. Diese Arbeitsweise ist aber aufwendig und aus wirtschaftlichen Gründen kaum zu realisieren.

Des weiteren sollen die Katalysatorsysteme auch bei Polymerisationstemperaturen von 150 °C an noch Produkte mit hohem Molekulargewicht liefern. Schließlich müssen sie in einfacher Weise aus gut zugänglichen Komponenten hergestellt werden können.

Die bisher für die Hochdruckpolymerisation von Ethylen allein oder mit anderen Olefinen eingesetzten Ziegler-Katalysatoren erfüllen nicht alle vorstehend aufgeführten Forderungen. Es bestand daher die Aufgabe, Katalysatorsysteme bereitzustellen, die die Nachteile der bekannten Polymerisationsverfahren nicht besitzen.

Überraschenderweise wird diese Aufgabe gelöst durch ein Verfahren zur Homo- oder Mischpolymerisation von Ethylen bei Temperaturen von 150 bis 350 °C und Drücken von 300 bis 3 500 bar $(30 \cdot 10^3$ bis $350 \cdot 10^3$ kPa) in Gegenwart von Katalysatoren, die aus einer metallorganischen Verbindung eines Metalles der 3. Gruppe des Periodensystems der Elemente (Komponente A) und einer Titanverbindung (Komponente B) bestehen. Es ist dadurch gekennzeichnet, daß die Titanverbindung (Komponente B) durch Umsetzung des Reaktionsproduktes aus einem Magnesiumalkoholat und einem Alkyl-, Alkenyl- oder Arylhalogensilan mit einem Titansäureester erhalten wird.

Zur Herstellung der Titanverbindung (Komponente B) des nach dem erfindungsgemäßen Verfahren verwendeten Katalysatorsystems wird zunächst ein Magnesiumalkoholat in einem Suspensionsmittel aufgeschlämmt. Geeignete Suspensionsmittel sind z. B. höhersiedende Kohlenwasserstoffe wie Hexan, Cyclohexan, Methylcyclohexan, Isooctan oder Kohlenwasserstofffraktionen mit einem Siedebereich von 100 bis 180 °C. Zu dieser Suspension gibt man bei 0 bis 150 °C unter Rühren in reiner Form oder als Lösung das Halogensilan hinzu und läßt ausreichende Zeit, d. h. 0,5 bis 100 Stunden, nachreagieren. Das feste Reaktionsprodukt wird durch mehrfaches Dekantieren von der nicht umgesetzten Halogensilanverbindung befreit, erneut suspendiert und unter Rühren und Erwärmen auf 40 bis 120 °C mit dem Titansäureester, der in reiner Form oder als Lösung verwendet werden kann, tropfenweise versetzt. Nach beendeter Reaktion wird der erhaltene Festkörper mehrfach gewaschen, um nicht umgesetzten Titansäureester zu entfernen.

Das molare Verhältnis von Alkyl-, Alkenyl- oder Arylhalogensilan zu Magnesiumalkoholat kann zwischen 0,5 und 10, vorzugsweise zwischen 1,0 und 5,0, betragen. Das molare Verhältnis von Titansäureester zu dem eingesetzten Magnesiumalkoholat kann zwischen 0,1 und 10, vorzugsweise zwischen 0,2 und 1,0, liegen.

Als Magnesiumalkoholate kommen insbesondere Verbindungen in Betracht, die sich von niedermolekularen, geradkettigen oder verzweigten primären aliphatischen Alkoholen ableiten, d. h. Alkoholen mit 1 bis 8 Kohlenstoffatomen. Beispiele für derartige Alkohole sind Ethanol, Isopropanol, n-Butanol und iso-Butanol. Bevorzugt eingesetzt wird Magnesiumethylat.

Das eingesetzte Magnesiumalkoholat muß feinkörnig sein. Dadurch wird sichergestellt, daß sich die Komponenten auch unter relativ milden Bedingungen weitgehend umsetzen und die unter Verwendung des Magnesiumalkoholat-Umsetzungsproduktes hergestellte Katalysatorsuspension einwandfrei pumpbar und dosierbar ist. Es soll mindestens 40 Gew.% Feinanteil < 63 μm aufweisen, der Grobanteil > 400 μm soll 5 Gew.% nicht überschreiten. Bevorzugt sind Magnesiumalkoholate mit einem Feinanteil < 63 μm von über 95 Gew.%.

Der feine Körnungsgrad des Magnesiumalkoholats wird z. B. durch Mahlen von handelsüblichem Magnesiumalkoholat in einer Kugelmühle erreicht. Auch die Umsetzung von Magnesiumalkylen in Lösung mit dem entsprechenden Alkohol ergibt feinkörniges Magnesiumalkoholat, das unmittelbar in Form der anfallenden Suspension weiterverarbeitet werden kann.

Die Alkyl-, Alkenyl- und Arylhalogensilane folgen der allgemeinen Formel $R_{4-n}SiX_n$, wobei n 1, 2 oder 3 ist, R für einen geradkettigen oder verzweigten Alkyl- oder Alkenylrest mit 1 bis 20 Kohlenstoffatomen oder einen Arylrest mit 6 bis 8 Kohlenstoffatomen steht und X Chlor oder Brom bedeutet. In Halogensilanen, die zwei oder drei Alkyl-, Alkenyl- oder Arylreste enthalten, können diese Reste gleich oder verschieden sein. Ebenso können in Halogensilanen mit mehr als einem Halogenatom gleiche oder verschiedene Halogenatome enthalten sein. Beispiele für geeignete Halogensilane sind Trimethylchlorsilan, Triethylchlorsilan, Phenyldimethylchlorsilan, Dimethyldichlorsilan, Diethyldichlorsilan, Diphenyldichlorsilan, Chlortrimethylsilan, Bromtrimethylsilan, Allyldimethylchlorsilan. Bevorzugt sind Dimethyldichlorsilan und Trimethylchlorsilan.

Die Titansäureester entsprechen der allgemeinen Formel $Ti(OR^1)_4$, wobei $R^1$ für Alkylreste mit 1 bis 20 und für Arylreste mit 6 bis 20 Kohlenstoffatomen steht. Die Alkyl- bzw. Arylreste im Titansäureester können gleich sein. Es ist aber auch möglich, gemischte Titansäureester einzusetzen, d. h. Verbindungen, die im gleichen Molekül verschiedene Alkyl- oder Arylreste enthalten. Auch der Einsatz von Polytitanaten wie Butylpolytitanat n—$C_4H_9$—O—[Ti(O—n$C_4H_9$)$_2$O]$_x$n—$C_4H_9$ ist möglich. Beispiele für besonders geeignete Titansäureester sind $Ti(OC_2H_5)_4$, $Ti(Oiso-C_3H_7)_4$, $Ti(On—C_4H_9)_4$.

Das eigentliche Katalysatorsystem entsteht dadurch, daß man die Titankomponente, deren Herstellung vorstehend beschrieben wurde, mit einer Aluminiumalkylverbindung umsetzt. Nach einem anderen Verfahren kann die Titankomponente in bekannter Weise mit einer Aluminiumalkylverbindung voraktiviert und mit einem α-Olefin, z. B. 1-Hexen, vorpolymerisiert werden. Auf diese Weise läßt sich die Pumpbarkeit der Katalysatorsuspension verbessern.

Das Atomverhältnis von Titan in der Katalysatorkomponente B zu Aluminium in der Katalysatorkomponente A beträgt 1 : 0,1 bis 1 : 400.

Das Katalysatorsystem wird als Mischung oder in Form seiner Komponenten als Suspension bzw. Lösung in höhersiedenden Kohlenwasserstoffen über Hochdruckpumpen dem Reaktor in solchen Mengen zugeführt, daß die gewünschte Reaktionstemperatur erreicht wird.

Die Polymerisation von Ethylen allein oder mit anderen Olefinen kann sowohl in Autoklaven als auch in Röhrenreaktoren durchgeführt werden. Der Polymerisationsdruck liegt zwischen 300 und 3 500 bar (30 · 10³ bis 350 · 10³ kPa), die Polymerisationstemperatur zwischen 150 und 350 °C. Zur Steuerung der Molekulargewichts führt man dem Reaktor 0,05 bis 5 Vol.% Wasserstoff, bezogen auf eingesetztes Ethylen, zu. Es können aber auch wesentlich höhere Konzentrationen an Wasserstoff verwendet werden. Auf diesem Wege erhält man Polymerisate mit vergleichsweise niedrigem Molekulargewicht (Wachse). Als Comonomere, die zusammen mit dem Ethylen polymerisiert werden, kommen niedere Olefine, wie 1-Propen, 1-Buten, 1-Hexen oder 1-Octen in Betracht. Sie werden über weitere Hochdruckpumpen in Mengen zwischen 0,5 und 75 Gew.%, bezogen auf die Summe aus Ethylen und Comonomer, dem Reaktionsgemisch zugesetzt. Das Polymerisat fällt als Schmelze an und wird über Abscheidesysteme, in denen die Trennung zwischen gasförmigen und flüssigen Anteilen erfolgt, einem Extruder zugeführt und granuliert.

In den folgenden Beispielen wird die Erfindung näher erläutert, ohne sie in ihrem Schutzumfang zu begrenzen.

Beispiel 1

a) Herstellung der Titankomponente

Handelsübliches $Mg(OC_2H_5)_2$ wird in einer Fliehkraft-Kugelmühle zu einem feinkörnigen Pulver (Feinkornanteil < 63 μm : > 95 %) vermahlen.

24 g dieses Mahlproduktes (208 mmol) werden in $N_2$-Atmosphäre in 1 000 ml Benzin suspendiert. Unter Rühren tropft man bei 80 °C in 45 min 107 ml Trimethylchlorsilan (834 mmol) hinzu und läßt 12 h bei 80 °C nachreagieren.

Durch mehrmaliges Abhebern der überstehenden flüssigen Phase und Wiederauffüllen mit frischem Benzin wird der Festkörper bei Zimmertemperatur solange gewaschen, bis die überstehende Phase kein Silan enthält.

Dann werden unter Rühren bei 80 °C in 180 min 23,7 g $Ti(OC_2H_5)_4$ (104 mmol) zugetropft. Man läßt 60 min unter Rühren bei 80 °C nachreagieren. Der Feststoff wird wie oben beschrieben gewaschen, bis die überstehende Phase frei von Titan ist. Die Suspension enthält 9,2 mmol Ti/l.

1 000 ml der Suspension werden bei 60 °C unter Rühren innerhalb 5 min mit 30,7 ml (18,4 mmol) einer 0,6 molaren Lösung von Tri-n-octylaluminium in Benzin versetzt (Voraktivierung), anschließend werden innerhalb von 15 min 6,8 ml 1-Hexen (55 mmol) in 50 ml Benzin zugetropft und darauf wird 2 h bei 65 °C nachgerührt (Vorpolymerisation).

b) Polymerisation von Ethylen

In einem 0,55 l-Hochdruckrührautoklaven wird mit einem Katalysatorsystem, das aus der Titankomponente gemäß 1a und Diethylaluminiumchlorid (DEAC) als Aktivator besteht, bei einem Druck von 1 400 bar (140 · 10³ kPa) und einer Temperatur von 240 °C kontinuierlich Ethylen polymerisiert. Die Molekulargewichtsregelung erfolgt mit 0,6 Vol.% Wasserstoff (bezogen auf Ethylen).

Bei Einsatz von 6 Nm³/h Ethylen, 0,1 mmol/h Titan (als Titankomponente) und 4,2 mmol/h DE-AC liegt der Umsatz bei 16,7 % (bezogen auf Ethylen) und der Katalysatorverbrauch bei 0,08 mmol Ti/kg Polyethylen. Die gebildete Polyethylenschmelze wird kontinuierlich über das Abscheidersystem gedrückt und granuliert. Der Schmelzindex MFI 190/2,16 des Granulats beträgt 1,72 g/10 min, der Kristallitschmelzpunkt 131 °C, die Dichte 0,947 g/cm³ und die Schlagzähigkeit 1 550 mJ/mm². Das Abgas enthält 0,11 Gew.% n-Buten.

c) Copolymerisation von Ethylen und n-Buten-1

In der Apparatur und mit dem Katalysatorsystem des Beispiels 1b werden bei einem Druck von 1 400 bar (140 · 10³ kPa) und einer Temperatur von 240 °C Ethylen und n-Buten-1 kontinuierlich copolymerisiert. Es werden 35 Gew.% Buten (bezogen auf Ethylen) eingesetzt, die Molekulargewichtsregelung erfolgt mit 0,3 Vol.% Wasserstoff (bezogen auf Ethylen).

Bei Einsatz von 7 Nm³/h Ethylen, 0,15 mmol/h Titan (als Titankomponente) und 6,0 mmol/h DE-AC liegt der Umsatz bei 18,1 % (bezogen auf Ethylen und Buten) und der Katalysatorverbrauch bei 0,07 mmol Ti/kg Copolymerisat. Der Schmelzindex des granulierten Copolymerisats beträgt 1,12 g/10 min, der Kristallitschmelzpunkt 122 °C, die Dichte 0,925 g/cm³ und die Schlagzugzähigkeit 2 025 mJ/mm².

Beispiel 2

a) Herstellung der Titankomponente

24 g nach Beispiel 1a gemahlenes $Mg(OC_2H_5)_2$ (208 mmol) werden unter $N_2$-Atmosphäre in 1 000 ml Benzin suspendiert. Unter Rühren tropft man bei 80 °C in 45 min 50 ml (416 mmol) Dimethyldichlorsilan hinzu und läßt 12 h bei 80 °C nachreagieren.

Durch mehrmaliges Abhebern der überstehenden flüssigen Phase und Wiederauffüllen mit frischem Benzin wird der Festkörper bei Zimmertemperatur solange gewaschen, bis die überstehende Phase kein Silan enthält.

Dann werden unter Rühren bei 80 °C in 180 min 23,7 g $Ti(OC_2H_5)_4$ (104 mmol) zugetropft. Man läßt 60 min unter Rühren bei 80 °C nachreagieren. Der Feststoff wird wie oben beschrieben gewaschen, bis die überstehende Phase frei von Titan ist. Die Suspension enthält 7,0 mmol Ti/l. 1 000 ml der Suspension werden analog Beispiel 1a im Verhältnis Ti : Tri-n-octylaluminium : 1-Hexen = 1 : 2 : 6 voraktiviert und vorpolymerisiert.

b) Polymerisation von Ethylen

In der Apparatur des Beispiels 1b wird mit einem Katalysatorsystem, das aus der Titankomponente gemäß Beispiel 2a und DEAC als Aktivator besteht, bei einem Druck von 1 400 bar (140 · 10³ kPa) und einer Temperatur von 240 °C kontinuierlich Ethylen polymerisiert. Die Molekulargewichtsregelung erfolgt mit 0,9 Vol.% Wasserstoff (bezogen auf Ethylen).

Bei Einsatz von 6,7 Nm³/h Ethylen, 0,08 mmol/h Titan (als Titankomponente) und 9 mmol/h DEAC liegt der Umsatz bei 15,9 % (bezogen auf Ethylen) und der Katalysatorverbrauch bei 0,06 mmol Ti/kg Polyethylen. Der Schmelzindex MFI 190/2,16 des erhaltenen Granulats beträgt 1,09 g/10 min, der Kristallitschmelzpunkt 129 °C, die Dichte 0,945 g/cm³ und die Schlagzugzähigkeit 1 475 mJ/mm². Das Abgas enthält 0,11 Gew.% n-Buten.

c) Copolymerisation von Ethylen und n-Hexen-1

In der Apparatur und mit dem Katalysatorsystem des Beispiels 2b werden bei einem Druck von 1 400 bar (140 · 10³ kPa) und einer Temperatur von 240 °C Ethylen und n-Hexen-1 copolymerisiert. Es werden 40,5 Gew.% Hexen (bezogen auf Ethylen) eingesetzt, die Molekulargewichtsregelung erfolgt mit 0,3 Vol.% Wasserstoff (bezogen auf Ethylen).

Bei Einsatz von 5,5 Nm³/h Ethylen, 0,1 mmol/h Titan (als Titankomponente) und 5,0 mmol/h DE-AC liegt der Umsatz bei 17,1 % (bezogen auf Ethylen und Hexen), der Katalysatorverbrauch bei 0,06 mmol Ti/kg Copolymerisat. Der Schmelzindex MFI 190/2,16 des granulierten Copolymerisats beträgt 13,2 g/10 min, der Kristallitschmelzpunkt 128 °C und die Dichte 0,932 g/cm³. Im Abgas sind 0,15 Gew.% n-Buten enthalten.

Beispiel 3

a) Herstellung der Titankomponente

Zu 200 mmol Butyloctylmagnesium in 2 500 ml Hexan werden in 1 h unter heftigem Rühren 18,4 g (400 mmol) Ethanol in 500 ml Hexan getropft. Man läßt 3 h bei Zimmertemperatur nachreagieren.

Nach Absitzen des Niederschlages wird die überstehende flüssige Phase abdekantiert und durch Benzin ersetzt.

Innerhalb 1 h tropft man nun bei 80 °C unter Rühren 44 ml Dimethyldichlorsilan (368 mmol) hinzu und läßt 12 h bei 80 °C nachreagieren.

Der Festkörper wird wie in den Beispielen 1 und 2 bei Zimmertemperatur gewaschen, bis die überstehende Phase kein Silan enthält. Dann werden unter Rühren bei 80 °C in 180 min 17,2 g $Ti(OC_2H_5)_4$ (76 mmol) zugetropft. Man läßt 60 min bei 80 °C nachreagieren.

Der Feststoff wird wie oben beschrieben gewaschen, bis die überstehende Phase frei von Titan ist. Die Suspension enthält 7,4 mmol Ti/l. 1 000 ml der Suspension werden analog Beispiel 1 im Verhältnis Ti : Diethylaluminiumchlorid : 1-Hexen = 1 : 2 : 6 voraktiviert und vorpolymerisiert.

b) Polymerisation von Ethylen

In der Apparatur des Beispiels 1b wird mit einem Katalysatorsystem, das aus der Titankomponente gemäß Beispiel 3a und Triisobutylaluminium (TIBA) als Aktivator besteht, bei einem Druck von 1 400 bar (140 · 10³ kPa) und einer Temperatur von 240 °C kontinuierlich Ethylen polymerisiert.

Die Molekulargewichtsregelung erfolgt mit 0,7 Vol.% Wasserstoff (bezogen auf Ethylen).

Bei Einsatz von 5,9 Nm³/h Ethylen, 0,11 mmol/h Titan (als Titankomponente) und 6,0 mmol/h TIBA liegt der Umsatz bei 14,9 % (bezogen auf Ethylen), der Katalysatorverbrauch bei 0,1 mmol Ti/kg Polyethylen.

Der Schmelzindex MFI 190/2,16 des granulierten Polymerisats beträgt 1,55 g/10 min, der Kristallitschmelzpunkt 131 °C, die Dichte 0,950 g/cm³ und die Schlagzugzähigkeit 1 600 mJ/mm².

Beispiel 4 (Vergleich)

In der Apparatur des Beispiels 1b wird mit einem zum Stand der Technik gehörenden Katalysatorsystem, das aus TiCl₃ · 1/3 AlCl₃ und Tri-n-octylaluminium (TNOA) als Aktivator besteht, bei einem Druck von 1 500 bar (150 · 10³ kPa) und einer Temperatur von 250 °C kontinuierlich Ethylen polymerisiert.

Die Molekulargewichtsregelung erfolgt mit 0,9 Vol.% Wasserstoff (bezogen auf Ethylen).

Bei Einsatz von 4,8 Nm³/h Ethylen, 0,8 mmol Ti/h (als TiCl₃ · 1/3 AlCl₃) und 14 mmol/h TNOA liegt der Umsatz bei 8,9 % (bezogen auf Ethylen), der Katalysatorverbrauch bei 1,5 mmol Ti/kg Polyethylen. Der Schmelzindex MFI 190/2,16 des granulierten Polymerisats lag bei 1,2 g/10 min, der Kristallitschmelzpunkt bei 132 °C, die Dichte bei 0,936 g/cm³ und die Schlagzugzähigkeit bei 1 200 mJ/mm².

Im Abgas waren 11,5 Gew.% n-Buten enthalten.

**Patentansprüche**

1. Verfahren zur Homo- oder Mischpolymerisation von Ethylen bei Temperaturen von 150 bis 350 °C und Drücken von 300 bis 3 500 bar (30 · 10³ bis 350 · 10³ kPa) in Gegenwart von Katalysatoren, die aus einer metallorganischen Verbindung eines Metalls der 3. Gruppe des Periodensystems der Elemente (Komponente A) und einer Titanverbindung (Komponente B) bestehen, dadurch gekennzeichnet, daß die Titanverbindung (Komponente B) durch Umsetzung des Reaktionsproduktes aus einem Magnesiumalkoholat und einem Alkyl-, Alkenyl- oder Arylhalogensilan mit einem Titansäureester erhalten wird.

2. Verfahren nach Anspruch 1, dadurch gekennzeichnet, daß sich das Magnesiumalkoholat von geradkettigen oder verzweigten primären aliphatischen Alkoholen mit 1 bis 8 Kohlenstoffatomen ableitet.

3. Verfahren nach Anspruch 2, dadurch gekennzeichnet, daß das Magnesiumalkoholat Magnesiumethylat ist.

4. Verfahren nach Anspruch 1 bis 3, dadurch gekennzeichnet, daß das Magnesiumalkoholat mindestens 40 Gew.% Feinkornanteil < 63 µm aufweist.

5. Verfahren nach Anspruch 1 bis 4, dadurch gekennzeichnet, daß die Alkyl-, Alkenyl- und Arylhalogensilane der allgemeinen Formel R₄₋ₙSiXₙ entsprechen, wobei n 1, 2 oder 3 ist, R gleich oder verschieden ist und für einen geradkettigen oder verzweigten Alkyl- oder Alkenylrest mit 1 bis 20 Kohlenstoffatomen oder einen Arylrest mit 6 bis 8 Kohlenstoffatomen steht und X gleich oder verschieden ist und Chlor oder Brom bedeutet.

6. Verfahren nach Anspruch 5, dadurch gekennzeichnet, daß das Alkylhalogensilan Dimethyldichlorsilan oder Trimethylchlorsilan ist.

7. Verfahren nach Anspruch 1 bis 6, dadurch gekennzeichnet, daß das Magnesiumalkoholat als Suspension in einem Kohlenwasserstoff bei 0 bis 150 °C mit dem Halogensilan umgesetzt wird.

8. Verfahren nach Anspruch 1 bis 7, dadurch gekennzeichnet, daß das molare Verhältnis von Halogensilan zu Magnesiumalkoholat 0,5 : 1 bis 10 : 1 beträgt.

9. Verfahren nach Anspruch 1 bis 8, dadurch gekennzeichnet, daß der Titansäureester der allgemeinen Formel Ti(OR¹)₄ entspricht, wobei R¹ gleich oder verschieden sein kann und Alkylreste mit 1 bis 30 und Arylreste mit 6 bis 20 Kohlenstoffatomen bedeutet.

10. Verfahren nach Anspruch 1 bis 9, dadurch gekennzeichnet, daß das molare Verhältnis von Titansäureester zu Magnesiumalkoholat 0,01 : 1 bis 10 : 1 beträgt.

11. Verfahren nach Anspruch 1 bis 10, dadurch gekennzeichnet, daß das Atomverhältnis von Titan in der Katalysatorkomponente B zu Aluminium in der Katalysatorkomponente A 1 : 0,1 bis 1 : 400 beträgt.

**Claims**

1. A process for the homo or copolymerisation of ethylene at temperatures of 150 to 350 °C and pressures of 300 to 3 500 bar (30 × 10³ to 350 × 10³ kPa) in the presence of catalysts consisting of an organometallic compound of a metal of the 3rd group of the periodic system of the elements (component A) and a titanium compound (component B), characterised in that the titanium compound (component B) is obtained by reacting the reaction product of a magnesium alcoholate and an alkyl, alkenyl or arylhalogenosilane with a titanic acid ester.

2. A process according to claim 1, characterised in that the magnesium alcoholate is derived from straight-chain or branched primary aliphatic alcohols with 1 to 6 carbon atoms.

3. A process according to claim 2, characterised in that the magnesium alcoholate is magnesium ethylate.

4. A process according to claims 1 to 3, characterised in that the magnesium alcoholate exhibits at least 40 wt.% fine grains of less than 63 μm.

5. A process according to claims 1 to 4, characterised in that the alkyl, alkenyl and arylhalogenosilanes correspond to the general formula $R_{4-n}SiX_n$, where n is 1, 2 or 3, R is the same or different and stands for a straight-chain or branched alkyl or alkenyl group with 1 to 20 carbon atoms or an aryl group with 6 to 8 carbon atoms and X is the same or different and means chlorine or bromium.

6. A process according to claim 5, characterised in that the alkylhalogenosilane is dimethyldichlorosilane or trimethylchlorosilane.

7. A process according to claims 1 to 6, characterised in that the magnesium alcoholate is reacted as a suspension in a hydrocarbon with the halogenosilane at 0 to 150 °C.

8. A process according to claims 1 to 7, characterised in that the molar ratio of halogenosilane to magnesium alcoholate is 0.5 : 1 to 10 : 1.

9. A process according to claims 1 to 8, characterised in that the titanium acid ester corresponds to the general formula $Ti(OR^1)_4$, where $R^1$ can be the same or different and denote alkyl groups with 1 to 30 carbon atoms and aryl groups with 6 to 20 carbon atoms.

10. A process according to claims 1 to 9, characterised in that the molar ratio of titanium acid ester to magnesium alcoholate is 0.01 : 1 to 10 : 1.

11. A process according to claims 1 to 10, characterised in that the atomic ratio of titanium in the catalyst component B to aluminium in the catalyst component A is 1 : 0.1 to 1 : 400.

## Revendications

1. Procédé pour l'homo- ou la co-polymérisation de l'éthylène à des températures de 150 à 350 °C et des pressions de 300 à 3 500 bars (30 × 10³ à 350 × 10³ kPa) en présence de catalyseurs consistant en un composé organométallique d'un métal du troisième groupe de la Classification Périodique des Eléments (composant A) et un composé du titane (composant B) caractérisé en ce que le composé du titane (composant B) est obtenu en faisant réagir avec un ester titanique le produit obtenu dans la réaction entre un alcoolate de magnésium et un alkyl-, alcényl- ou arylhalogénosilane.

2. Procédé selon la revendication 1, caractérisé en ce que l'alcoolate de magnésium dérive d'alcools aliphatiques primaires à chaîne droite ou ramifiée en $C_1$-$C_8$.

3. Procédé selon la revendication 2, caractérisé en ce que l'alcoolate de magnésium est le méthylate de magnésium.

4. Procédé selon les revendications 1 à 3, caractérisé en ce que l'alcoolate de magnésium contient au moins 40 % en poids de grains fins de dimensions inférieures à 63 microns.

5. Procédé selon les revendications 1 à 4, caractérisé en ce que les alkyl-, alcényl- et arylhalogénosilanes répondent à la formule générale $R_{4-n}SiX_n$ dans laquelle n est égal à 1, 2 ou 3, les symboles R ont des significations identiques ou différentes et représentent chacun un groupe alkyle ou alcényle à chaîne droite ou ramifiée en $C_1$-$C_{20}$ ou un groupe aryle en $C_6$-$C_8$ et les symboles X ont des significations identiques ou différentes et représentent chacun le chlore ou le brome.

6. Procédé selon la revendication 5, caractérisé en ce que l'alkylhalogénosilane est le diméthyldichlorosilane ou le triméthylchlorosilane.

7. Procédé selon les revendications 1 à 6, caractérisé en ce que l'alcoolate de magnésium est mis à réagir avec l'halogénosilane à l'état de suspension dans un hydrocarbure à une température de 0 à 150 °C.

8. Procédé selon les revendications 1 à 7, caractérisé en ce que le rapport molaire halogénosilane/alcoolate de magnésium va de 0,5 : 1 à 10 : 1.

9. Procédé selon les revendications 1 à 8, caractérisé en ce que l'ester titanique répond à la formule générale $Ti(OR^1)_4$ dans laquelle les symboles $R^1$, ayant des significations identiques ou différentes, représentent des groupes alkyle en $C_1$-$C_{30}$ ou des groupes aryle en $C_6$-$C_{20}$.

10. Procédé selon les revendications 1 à 9, caractérisé en ce que le rapport molaire ester titanique/alcoolate de magnésium va de 0,01 : 1 à 10 : 1.

11. Procédé selon les revendications 1 à 10, caractérisé en ce que le rapport atomique du titane contenu dans le composant B du catalyseur à l'aluminium contenu dans le composant A du catalyseur va de 1 : 0,1 à 1 : 400.